# EUROPÄISCHE PATENTSCHRIFT

(11) **EP 2 634 025 B1**
(45) Veröffentlichungstag und Bekanntmachung des Hinweises auf die Patenterteilung: **01.01.2020**
(21) Anmeldenummer: 13157054.1
(22) Anmeldetag: 27.02.2013
(51) Int. Cl.: B60J 7/06, B60J 7/047

(54) **Kraftfahrzeug mit einer Dachöffnung**
Motor vehicle with a roof opening
Véhicule automobile doté d'une ouverture de toit

(30) Priorität: 01.03.2012 DE 102012101752
(43) Veröffentlichungstag der Anmeldung: 04.09.2013
(73) Patentinhaber: Magna Steyr Fahrzeugtechnik AG & Co KG, 8041 Graz (AT); Magna Car Top Systems GmbH, 74321 Bietigheim-Bissingen (DE)
(72) Erfinder: Aschaber, Christoph, 8010 Graz (AT); Careni, Claus, 74321 Bietigheim-Bissingen (DE); Klein, Berthold, 74343 Sachsenheim (DE); Richter, Wolfgang, Michigan, 48382 (US); Rodler, Martin, 8160 Krottendorf (AT)
(74) Vertreter: Zangger, Bernd

(56) Entgegenhaltungen:
- WO-A1-2009/052946
- DE-A1-102006 000 725
- DE-C1- 4 142 265
- US-A1- 2005 134 096

## Beschreibung

Die vorliegende Erfindung betrifft ein Kraftfahrzeug mit einer Dachöffnung in einer festen Dachfläche des Kraftfahrzeugs und zumindest einem Dachmechanismus, zum wahlweisen Verschließen und zumindest teilweisen Öffnen der Dachöffnung, wobei die Dachöffnung ein vorderes Faltdachsystem und ein hinteres Faltdachsystem aufweist.

Aus dem Stand der Technik ist die DE3828062C2 bekannt. Bei diesem System ist ein Fahrzeugdach mit einem verstellbaren Dachmechanismus zum wahlweisen Verschließen und zum mindestens teilweisen Freilegen einer Dachöffnung in einer festen Dachfläche des Fahrzeugs, wobei der Dachmechanismus aus einer Kombination eines frontseitigen Spoilerdaches und eines heckseitigen Faltdaches besteht, die beide an längsverlaufenden Führungsschienen entlang verstellbar sind, die zu beiden Seiten der Dachöffnung angeordnet sind.

Nachteilig bei dieser Ausführung ist, dass das frontseitige Spoilerdach und das heckseitige Faltdach nur gemeinsam in eine geöffnete bzw. in eine geschlossene Stellung gebracht werden können. Auch lässt sich der Dachmechanismus nur in eine Richtung, in Richtung Heck, öffnen.

Die DE 10 2006 000725 A1 offenbart ein Kraftfahrzeugsystem umfassend ein bewegliches Dach, ein mit dem beweglichen Dach gekoppeltes Betätigungssystem, ein mit dem Betätigungssystem gekoppeltes Steuermodul und eine mit dem Steuermodul gekoppelte Steuereinrichtung, wobei die Steuereinrichtung die Bewegung des beweglichen Dachs betriebswirksam über einen ersten Schalter steuert, wobei sich das bewegliche Dach betriebswirksam in einer gleichen Richtung bewegt wie eine Bewegung des ersten Schalters.

Weitere Dachmechanismen zum teilweisen Öffnen und teilweisen Verschließen von Dachöffnungen sind aus der US 2005/134096 A1, der DE 41 42 265 C1 und der WO 2009/052946 A1 bekannt.

Aufgabe der Erfindung ist es derartige Dachmechanismen so zu verbessern, dass die oben genannten Nachteile beseitigt werden, und einen insbesondere flexiblen Dachmechanismus anzugeben. Dies wird erfindungsgemäß mit den Merkmalen des Anspruch 1 gelöst.

Erfindungsgemäß wird ein Kraftfahrzeug mit einer Dachöffnung vorgeschlagen mit einer festen Dachfläche des Kraftfahrzeugs und zumindest einem Dachmechanismus, zum wahlweisen Verschließen und zumindest teilweisen Öffnen der Dachöffnung wobei, der Dachmechanismus ein vorderes Faltdachsystem und ein hinteres Faltdachsystem aufweist, wobei das vordere Faltdachsystem einen vorderen Verdeckbezug und das hintere Faltdachsystem einen hinteren Verdeckbezug umfassen, wobei ein vorderen Bereich der Dachöffnung durch das vordere Faltdachsystem verschlossen oder geöffnet werden kann und ein hinterer Bereich der Dachöffnung durch das hintere Faltdachsystem, wobei das vordere Faltdachsystem und das hintere Faltdachsystem mittels Verschieben entlang längsverlaufender Führungsschienen, die zu beiden Seiten der Dachöffnung angeordnet sind, verschlossen oder geöffnet werden kann, und wobei das vordere Faltdachsystem und das hintere Faltdachsystem unabhängig voneinander verschlossen oder geöffnet werden kann.

Erfindungsgemäß sind die längsverlaufenden Führungsschienen jeweils in einem vorderen Dachrahmen und in einem hinteren Dachrahmen integriert. Die Führungsschienen dienen zum Aufnehmen der beweglichen Dachelemente und weisen zumindest einen Kanal zur Aufnahme von Antriebskabel zur Betätigung des Dachmechanismus auf.

Erfindungsgemäß sind die längsverlaufenden Führungsschienen des vorderen Dachrahmens und des hinteren Dachrahmens nicht miteinander verbunden.

Vorzugsweise ist der hinter Bereich der Dachöffnung größer ausgebildet als der vordere Bereich der Dachöffnung.

Der hintere Verdeckbezug ist an einem hinteren Dachrahmen angeordnet, wobei der hintere Dachrahmen ein nach hinten offenes U darstellt. Die hintere Dachöffnung kann dabei vom Verdeckbezug nach vorne und/oder nach hinten verschlossen oder geöffnet werden.
Diese Merkmale erlauben es, dass bei nach vorn geöffnetem Verdeck ein großer Laderaum geschaffen wird. Dadurch wird eine einfache Beladung auch mit höherem Ladegut wie beispielsweise Fahrrädern auf einfache Weise ermöglicht.

Gemäß einer erfindungsgemäßen Ausführungsform sind die Faltdachsysteme mittels Elektromotoren betätigbar. Die Elektromotoren wirken dabei über Antriebskabel auf eine Mechanik beispielsweise Antriebsschlitten, welche die Verdeckbezüge entsprechend dem Fahrerwunsch in eine Offen- oder Geschlossenstellung bringen. Erfindungsgemäß sind beispielsweise für das vordere Dachfaltsystem ein Elektromotor und für das hintere Dachfaltsystem zwei Elektromotoren vorgesehen. Es ist jedoch auch erfindungsgemäß möglich für das hintere Dachfaltsystem nur einen Elektromotor zu verwenden. Die zwei Elektromotoren können erfindungsgemäß auch so betrieben werden, dass der hintere Verdeckbezug auch in beide Richtungen gleichzeitig verfahren werden kann, und jede beliebige Zwischenstellung, zwischen der vorderen und der hinteren Ablageposition einnehmen kann.

Für das vordere Faltdachsystem ist der Elektromotor an einem Trägerrahmen des vorderen Dachrahmens angeordnet.

Für das hintere Faltdachsystem sind die beiden Elektromotoren an einem Antriebsquerträger des hinteren Dachrahmens angeordnet.

Es versteht sich erfindungsgemäß von selbst, dass neben Elektromotoren auch andere Antriebssysteme anwendbar sind.

Ein für eine Dachöffnung für Faltverdecke üblicher umlaufender Modulrahmen wird bei dieser erfindungsgemäßen Ausführung nicht verwendet, da aufgrund des hinteren nach hinten offenen U förmigen Dachrahmens keine zusätzliche Verwindungssteifigkeit erreicht wird, und aufgrund eines aufweisenden hinteren Querrahmen des Modulrahmens die Belademöglichkeit eingeschränkt wird. Durch den Verzicht des Modulrahmens kann die Bauhöhe für die Faltdachsysteme sowie das Fahrzeuggewicht reduziert werden.

Gemäß einer weiteren vorteilhaften Ausgestaltung der Erfindung, dient das geöffnete vordere Faltdachsystem, im geöffneten Zustand des hinteren Dachbereichs, als Windabweiser. Dadurch entstehen für im Fondbereich sitzende Fahrzeuginsassen keine unangenehmen Luftverwirbelungen im Fahrzeuginnenraum.

In einer erfindungsgemäßen Ausführungsform können das vordere und/oder hintere Faltdachsystem transparente Elemente aufweisen, wobei die transparenten Elemente vorzugsweise steif ausgebildet sind. Die Faltdachsysteme 2,3 falten sich beim Öffnen im Bereich des Verdeckbezugs 4,5 so, dass die transparenten Elemente sich übereinander gestapelt ablegen.

Bevorzugt können die transparenten Elemente unterschiedliche Breiten und/oder Längen und/oder Formen aufweisen. Damit kann ein gewünschter optischer Effekt erreicht werden.

Die Erfindung wird im Folgenden beispielhaft unter Bezugnahme auf die Zeichnungen beschrieben.
- Fig. 1: zeigt einen erfindungsgemäßen Dachmechanismus im geschlossenen Zustand
- Fig. 2: zeigt ein hinteres Faltdachsystem in einer möglichen Öffnungsform
- Fig. 3: zeigt ein hinteres Faltdachsystem in einer weiteren möglichen Öffnungsform

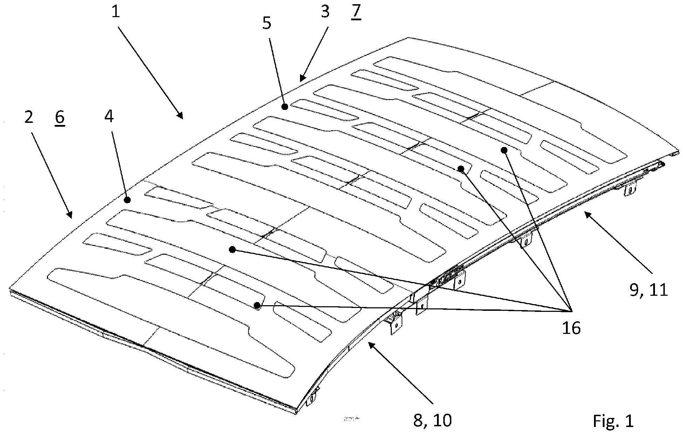

In Fig. 1 wird ein erfindungsgemäßer Dachmechanismus 1 im geschlossenen Zustand dargestellt. Der Dachmechanismus 1 umfasst dabei ein vorderes Faltdachsystem 2 und ein hinteres Faltdachsystem 3. Ein vorderer Verdeckbezug 4, sowie ein hinterer Verdeckbezug 5 verschließen einen vorderen Bereich der Dachöffnung 6 bzw. einen hinteren Bereich der Dachöffnung 7. Der vordere Verdeckbezug 4 ist dabei einem vorderen Dachrahmen 10, der hintere Verdeckbezug 5 einem hinteren Dachrahmen 11 zugeordnet. Im vorderen und hinteren Dachrahmen 10, 11 sind jeweils, nicht miteinander verbundene, Führungsschienen 8,9 im vorderen bzw. hinteren Dachrahmen 10, 11 integriert. Die Führungsschienen 8,9 dienen zur Aufnahme der beweglichen Dachelemente. Der vordere und der hintere Verdeckbezug 4,5 weisen transparente Dachelemente 16 auf, welche unterschiedliche Breiten und/oder Längen und/oder Formen aufweisen können.

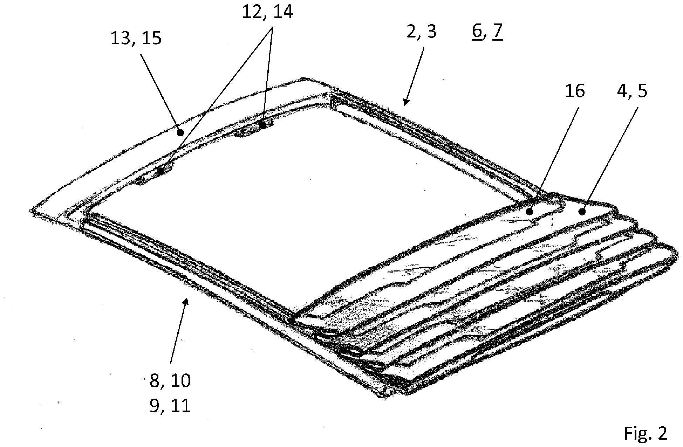

In Fig. 2 wird eine mögliche Öffnungsform des hinteren Faltdachsystems 3 dargestellt. Die Stellung des geöffneten hinteren Verdeckbezugs 5 wird hierbei bevorzugt als eine Lüftungsöffnung verwendet. Die in Fahrzeugrichtung längsverlaufenden Führungsschienen 9 sind an beiden Seiten des Fahrzeugs angeordnet und werden durch einen Antriebsquerträger 15 miteinander verbunden. Im Bereich des Antriebsquerträgers 15 sind die zur Öffnung des Verdeckbezugs 5 benötigten Elektromotoren 14 angeordnet. Die beiden Führungsschienen 9 und der Antriebsquerträger 15 bilden gemeinsam im wesentlichen den hinteren Dachrahmen 11.
Man kann sich Fig. 2 auch als Öffnungsstellung für das vordere Faltdachsystem 2 vorstellen. Der vordere Verdeckbezug 4 wird im geöffneten Zustand in Fahrzeuglängsrichtung gesehen nach hinten geöffnet. Der geöffnete vordere Verdeckbezug 4 dient im offenen Zustand gleichzeitig als Windabweiser für den hinteren Bereich der Dachöffnung 7. Hier bilden die Führungsschienen 8 gemeinsam mit dem Trägerrahmen 13, sowie einer hinteren Querverbindung (nicht dargestellt) den vorderen Dachrahmen 10. Die Faltdachsysteme 2,3 falten sich im Bereich des Verdeckbezugs 4,5 so, dass die transparenten Elemente sich übereinander gestapelt ablegen.

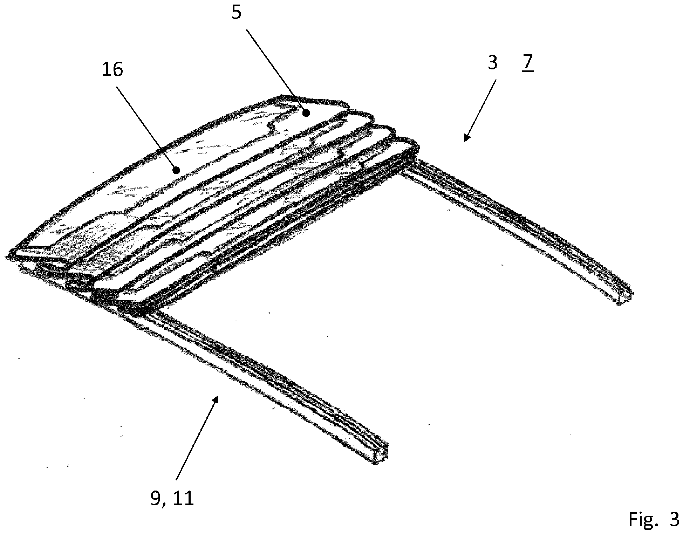

Fig. 3 zeigt den hinteren Verdeckbezug 5 nach vorne geöffnet, wodurch hinten ein großer Laderaum frei wird, und aufgrund der nach hinten offenen U Form des hinteren Dachrahmens 11 ist es möglich auch sperriges Ladegut wie beispielsweise Fahrräder einfach in das Fahrzeug zu laden und zu transportieren.

### Bezugszeichenliste

- 1: Dachmechanismus
- 2: vorderes Faltdachsystem
- 3: hinteres Faltdachsystem
- 4: vorderer Verdeckbezug
- 5: hinterer Verdeckbezug
- 6: vorderer Bereich Dachöffnung
- 7: hinterer Bereich Dachöffnung
- 8: Führungsschiene
- 9: Führungsschiene
- 10: vorderer Dachrahmen
- 11: hinterer Dachrahmen
- 12: Elektromotor vorderer Verdeckbezug
- 13: Trägerrahmen
- 14: Elektromotor hinterer Verdeckbezug
- 15: Antriebsquerträger
- 16: transparente Elemente

## Patentansprüche

1. Kraftfahrzeug mit einer Dachöffnung in einer festen Dachfläche des Kraftfahrzeugs und zumindest einem Dachmechanismus (1), zum wahlweisen Verschließen und zumindest teilweisen Öffnen der Dachöffnung , wobei der Dachmechanismus (1) ein vorderes Faltdachsystem (2) und ein hinteres Faltdachsystem (3) aufweist, wobei das vordere Faltdachsystem (2) einen vorderen Verdeckbezug (4) und das hintere Faltdachsystem (3) einen hinteren Verdeckbezug (5) umfassen, wobei ein vorderer Bereich der Dachöffnung (6) durch das vordere Faltdachsystem (2) mittels Verschieben entlang längsverlaufender Führungsschienen (8), die zu beiden Seiten der Dachöffnung angeordnet sind verschlossen und geöffnet werden kann und ein hinterer Bereich der Dachöffnung (7) durch das hintere Faltdachsystem (3) mittels Verschieben entlang längsverlaufender Führungsschienen (9), die zu beiden Seiten der Dachöffnung angeordnet sind verschlossen und geöffnet werden kann, und wobei das vordere Faltdachsystem (2) und das hintere Faltdachsystem (3) unabhängig voneinander verschlossen und geöffnet werden können, **dadurch gekennzeichnet, dass** der hintere Verdeckbezug (4,5) eine Vielzahl transparente Elemente (16) aufweist, wobei die Vielzahl transparenter Elemente (16) als steife Flächenelemente ausgebildet sind, wobei der hintere Bereich der Dachöffnung (7) nach vorne und nach hinten zumindest teilweise verschlossen und geöffnet werden kann, wobei die längsverlaufenden Führungsschienen (8,9) jeweils in einem vorderen Dachrahmen (10) und in einem hinteren Dachrahmen (11) integriert sind, wobei die längsverlaufenden Führungsschienen (8,9) des vorderen Dachrahmens (10) und des hinteren Dachrahmens (11) nicht miteinander verbunden sind.

2. Kraftfahrzeug mit einer Dachöffnung nach Anspruch 1, **dadurch gekennzeichnet, dass** der hintere Bereich der Dachöffnung (7) größer ausgebildet ist, als der vordere Bereich der Dachöffnung (6).

3. Kraftfahrzeug mit einer Dachöffnung nach Anspruch 1, **dadurch gekennzeichnet, dass** der hintere Verdeckbezug (5) an einem hinteren Dachrahmen (11) angeordnet ist, und der vordere Verdeckbezug (4) an einem vorderen Dachrahmen (10) angeordnet ist, und wobei der hintere Dachrahmen (11) eine nach hinten offene U-Form darstellt.

4. Kraftfahrzeug mit einer Dachöffnung nach Anspruch 1, **dadurch gekennzeichnet, dass** das vordere Faltdachsystem (2) von einem einzelnen Elektromotor (12) betätigbar ist.

5. Kraftfahrzeug mit einer Dachöffnung nach Anspruch 4, **dadurch gekennzeichnet, dass** der einzelne Elektromotor (12) an einem Trägerrahmen (13) angeordnet ist.

6. Kraftfahrzeug mit einer Dachöffnung nach Anspruch 1, **dadurch gekennzeichnet, dass** das hintere Faltdachsystem (3) von zwei Elektromotoren (14) betätigbar ist.

7. Kraftfahrzeug mit einer Dachöffnung nach Anspruch 8, **dadurch gekennzeichnet, dass** die zwei Elektromotoren (14) an einem Antriebsquerträger (15) des hinteren Dachrahmen (11) angeordnet sind.

8. Kraftfahrzeug mit einer Dachöffnung nach Anspruch 1, **dadurch gekennzeichnet, dass** die Dachöffnung keinen umlaufenden Modulrahmen aufweist.

9. Kraftfahrzeug mit einer Dachöffnung nach Anspruch 1, **dadurch gekennzeichnet, dass** das geöffnete vordere Faltdachsystem (2) so eingerichtet ist, dass es als Windabweiser für den hinteren Dachbereich (7) im geöffneten Zustand dient.

10. Kraftfahrzeug mit einer Dachöffnung nach Anspruch 1, **dadurch gekennzeichnet, dass** der vordere Verdeckbezug (4,5) eine Vielzahl transparente Elemente (16) aufweist.

11. Kraftfahrzeug mit einer Dachöffnung nach Anspruch 10, **dadurch gekennzeichnet, dass** die Vielzahl transparenter Elemente (16) als steife Flächenelemente ausgebildet sind.

12. Kraftfahrzeug mit einer Dachöffnung nach Anspruch 10, **dadurch gekennzeichnet, dass** die transparenten Elemente (16) unterschiedliche Breiten und/ oder Längen und/oder Formen aufweisen.

## Claims

1. Motor vehicle with a roof opening in a fixed roof surface of the motor vehicle and with at least one roof mechanism (1), for optionally closing and at least partially opening the roof opening, wherein the roof mechanism (1) has a front folding roof system (2) and a rear folding roof system (3), wherein the front folding roof system (2) comprises a front folding-top cloth (4) and the rear folding roof system (3) comprises a rear folding-top cloth (5), wherein a front region of the roof opening (6) can be closed and opened by the front folding roof system (2) by means of displacement along longitudinally running guide rails (8) which are arranged on both sides of the roof opening, and a rear region of the roof opening (7) can be closed and opened by the rear folding roof system (3) by means of displacement along longitudinally running guide rails (9) which are arranged on both sides of the roof opening, and wherein the front folding roof system (2) and the rear folding roof system (3) can be closed and opened independently of each other,
**characterized in that** the rear folding-top cloth (4, 5) has a multiplicity of transparent elements (16), wherein the multiplicity of transparent elements (16) are designed as stiff surface elements, wherein the rear region of the roof opening (7) can be at least partially closed and opened forwards and rearwards, wherein the longitudinally running guide rails (8, 9) are respectively integrated in a front roof frame (10) and in a rear roof frame (11), wherein the longitudinally running guide rails (8, 9) of the front roof frame (10) and of the rear roof frame (11) are not connected to each other.

2. Motor vehicle with a roof opening according to Claim 1,
**characterized in that,** the rear region of the roof opening (7) is designed to be larger than the front region of the roof opening (6).

3. Motor vehicle with a roof opening according to Claim 1,
**characterized in that**, the rear folding-top cloth (5) is arranged on a rear roof frame (11), and the front folding-top cloth (4) is arranged on a front roof frame (10), and wherein the rear roof frame (11) constitutes a rearwardly open U shape.

4. Motor vehicle with a roof opening according to Claim 1,
**characterized in that,** the front folding roof system (2) is actuable by an individual electric motor (12).

5. Motor vehicle with a roof opening according to Claim 4,
**characterized in that**, the individual electric motor (12) is arranged on a support frame (13).

6. Motor vehicle with a roof opening according to Claim 1,
**characterized in that**, the rear folding roof system (3) is actuable by two electric motors (14).

7. Motor vehicle with a roof opening according to Claim 6,
**characterized in that**, the two electric motors (14) are arranged on a driving cross member (15) of the rear roof frame (11).

8. Motor vehicle with a roof opening according to Claim 1,
**characterized in that**, the roof opening does not have an encircling module frame.

9. Motor vehicle with a roof opening according to Claim 1,
**characterized in that**, the opened front folding roof system (2) is designed in such a manner that, in the opened state, it serves as a wind deflector for the rear roof region (7).

10. Motor vehicle with a roof opening according to Claim 1,
**characterized in that**, the front folding-top cloth (4, 5) has a multiplicity of transparent elements (16).

11. Motor vehicle with a roof opening according to Claim 10,
**characterized in that**, the multiplicity of transparent elements (16) are designed as stiff surface elements.

12. Motor vehicle with a roof opening according to Claim 10,
**characterized in that,** the transparent elements (16) have different widths and/or lengths and/or shapes.

## Revendications

1. Véhicule automobile doté d'une ouverture de toit dans une surface de toit fixe du véhicule automobile et d'au moins un mécanisme de toit (1), pour sélectivement fermer et au moins partiellement ouvrir l'ouverture de toit, le mécanisme de toit (1) comprenant un système de toit pliant avant (2) et un système de toit pliant arrière (3), le système de toit pliant avant (2) comprenant un revêtement de capote avant (4) et le système de toit pliant arrière (3) comprenant un revêtement de capote arrière (5), une région avant de l'ouverture de toit (6) pouvant être fermée et ouverte au moyen du système de toit pliant avant (2) par déplacement le long de rails de guidage (8) s'étendant longitudinalement, lesquels sont disposés des deux côtés de l'ouverture de toit, et une région arrière de l'ouverture de toit (7) pouvant être fermée et ouverte au moyen du système de toit pliant arrière (3) par déplacement le long de rails de guidage (9) s'étendant longitudinalement, lesquels sont disposés des deux côtés de l'ouverture de toit, et le système de toit pliant avant (2) et le système de toit pliant arrière (3) pouvant être fermés et ouverts indépendamment l'un de l'autre,
**caractérisé en ce que** le revêtement de capote arrière (4, 5) comprend une pluralité d'éléments transparents (16), la pluralité d'éléments transparents (16) étant réalisés en tant qu'éléments de surface rigides, la région arrière de l'ouverture de toit (7) pouvant être fermée et ouverte au moins partiellement vers l'avant et vers l'arrière, les rails de guidage (8, 9) s'étendant longitudinalement étant intégrés respectivement dans un cadre de toit avant (10) et dans un cadre de toit arrière (11), les rails de guidage (8, 9) s'étendant longitudinalement du cadre de toit avant (10) et du cadre de toit arrière (11) n'étant pas reliés les uns aux autres.

2. Véhicule automobile comprenant une ouverture de toit selon la revendication 1,
**caractérisé en ce que** la région arrière de l'ouverture de toit (7) est plus grande que la région avant de l'ouverture de toit (6).

3. Véhicule automobile comprenant une ouverture de toit selon la revendication 1,
**caractérisé en ce que** le revêtement de capote arrière (5) est disposé sur un cadre de toit arrière (11), et le revêtement de capote avant (4) est disposé sur un cadre de toit avant (10), et le cadre de toit arrière (11) représentant une forme en U ouverte vers l'arrière.

4. Véhicule automobile comprenant une ouverture de toit selon la revendication 1,
**caractérisé en ce que** le système de toit pliant avant (2) peut être actionné par un moteur électrique individuel (12).

5. Véhicule automobile comprenant une ouverture de toit selon la revendication 4,
**caractérisé en ce que** le moteur électrique individuel (12) est disposé sur un cadre de support (13).

6. Véhicule automobile comprenant une ouverture de toit selon la revendication 1,
**caractérisé en ce que** le système de toit pliant arrière (3) peut être actionné par deux moteurs électriques (14).

7. Véhicule automobile comprenant une ouverture de toit selon la revendication 6,
**caractérisé en ce que** les deux moteurs électriques (14) sont disposés sur une traverse d'entraînement (15) du cadre de toit arrière (11).

8. Véhicule automobile comprenant une ouverture de toit selon la revendication 1,
**caractérisé en ce que** l'ouverture de toit ne comprend aucun cadre de module périphérique.

9. Véhicule automobile comprenant une ouverture de toit selon la revendication 1,
**caractérisé en ce que** le système de toit pliant avant ouvert (2) est conçu de telle sorte qu'il sert de déflecteur d'air pour la région de toit arrière (7) dans l'état ouvert.

10. Véhicule automobile comprenant une ouverture de toit selon la revendication 1,
**caractérisé en ce que** le revêtement de capote avant (4, 5) comprend une pluralité d'éléments transparents (16).

11. Véhicule automobile comprenant une ouverture de toit selon la revendication 10,
**caractérisé en ce que** la pluralité d'éléments transparents (16) sont réalisés en tant qu'éléments de surface rigides.

12. Véhicule automobile comprenant une ouverture de toit selon la revendication 10,
**caractérisé en ce que** les éléments transparents (16) présentent des largeurs et/ou longueurs et/ou formes différentes.
